# EUROPÄISCHE PATENTSCHRIFT

(11) **EP 1 864 922 B1**
(45) Veröffentlichungstag und Bekanntmachung des Hinweises auf die Patenterteilung: **18.08.2010**
(21) Anmeldenummer: 07009657.3
(22) Anmeldetag: 15.05.2007
(51) Int. Cl.: B65G 47/91

(54) **Verfahren zum Abheben der obersten Kunstoffplatte von einem Plattenstapel und Vorrichtung zum Abheben der obersten Kunstoffplatte**
Method for removing the top plastic board from a stack and device for removing the top plastic board
Procédé destiné au décollage de la plaque en plastique la plus haute d'une pile de plaques et dispositif destiné au décollage de la plaque en plastique la plus haute

(30) Priorität: 18.05.2006 DE 102006023298
(43) Veröffentlichungstag der Anmeldung: 12.12.2007
(73) Patentinhaber: ILLIG Maschinenbau GmbH & Co. KG, 74081 Heilbronn (DE)
(72) Erfinder: Schwarzmann, Peter, 74081 Heilbronn (DE); Peter, Markus, 74074 Heilbronn (DE); Ruoff, Gebhard, 73635 Rudersberg (DE)

(56) Entgegenhaltungen:
- EP-A- 1 215 148
- JP-A- 60 252 543
- US-A- 3 724 687

## Beschreibung

Die Erfindung betrifft ein Verfahren zum Abheben der obersten Kunststoffplatte von einem Plattenstapel nach dem Oberbegriff des Patentanspruches 1 wie in US 3 724 687 A beschrieben und eine Vorrichtung zum Abheben der obersten Kunststoffplatte nach dem Oberbegriff des Patentanspruches 4.

Ein Problem beim Abheben der obersten Kunststoffplatte von einem Plattenstapel besteht darin, dass die zweite Kunststoffplatte an der obersten Kunststoffplatte haftet oder sogar mehrere Kunststoffplatten zusammenhängen. Gründe können elektrostatische Aufladung bzw. glatte Oberflächen der Kunststoffplatten sein, die ein seitliches Eindringen der Umgebungsluft zwischen die Kunststoffplatten verhindern oder verzögern. Die Folge sind Betriebsstörungen, wenn die Kunststoffplatten einzeln weiterverarbeitet werden sollen, z.B. durch Tiefziehen. Dieses Problem tritt verstärkt dann auf, wenn die Kunststoffplatten mit einer Schutzfolie versehen sind.

Es ist zur Verhinderung des Zusammenhaftens beim Ablösen der obersten Kunststoffplatte bekannt, seitlich am Plattenstapel Bürsten oder Riffelbleche anzuordnen, die die zweite und ggf. weitere Kunststoffplatten zurückhalten oder abwerfen sollen. Bürsten arbeiten nicht zuverlässig und sind einem Verschleiß unterworfen. Riffelbleche bewirken einen Abrieb des Kunststoffmaterials, wobei dieser Abrieb wegen elektrostatischer Aufladung an der Kunststoffplatte hängen bleibt, was nicht immer akzeptabel ist. Bekannt sind ferner senkrecht verlaufende Schlitzdüsen, die aber immer auf ganzer Höhe des Plattenstapels blasen, also viel Luft verbrauchen und Staub aufwirbeln, der wiederum von elektrostatisch aufgeladenen Kunststoffplatten angezogen wird.

Aus der Druckschrift DE-GM 94 04 217 ist es bekannt, Sauger zum Abheben zu verwenden und über einen höhenverschiebbaren Wagen Blasdüsen so zu positionieren, dass Blasluft zwischen die oberste und die nächste Kunststoffplatte eingeblasen werden kann. Diese Wagen, von denen mindestens zwei erforderlich sind, sind aufwändig und arbeiten unzuverlässig. Bei der Verwendung von Blasluft besteht bei mit einer Schutzfolie versehenen Kunststoffplatten immer die Gefahr, dass die Schutzfolie teilweise von der Kunststoffplatte am Rand gelöst wird und sich umschlägt. Die Folge sind Betriebsstörungen und/oder Ausschussteile.

Aus der DE 297 13 871 U1 ist es bekannt, beim Aufnehmen der obersten Platte diese gegen Festanschläge zu bewegen, wodurch ein Wölben der Platte entsteht. Die Festanschläge sind am Rand der Kunststoffplatte oder mittig angeordnet. Diese Festanschläge erlauben nur das Wölben einer Kunststoffplatte in einer Richtung, was nicht zuverlässig zum Abwerfen einer zweiten aufgenommenen Kunststoffplatte führt.

Aus der DE 91 00 269 U1 ist es bekannt, eine Wölbung eines Kartons beim Abheben zu erreichen. Dazu wird ein mittiges Ansaugrohr mit einer Formgebung eingesetzt. Dies ist jedoch bei größeren Kunststoffplatten nicht anwendbar, weil dort gewichtsbedingt mehrere Sauger angeordnet werden müssen.

Aus der DE 198 54 826 A1 ist ein Sauger bekannt, der durch seine Gestaltung ein Wölben der Kunststoffplatte beim Abheben am Rand erzielen soll. Dieses Prinzip funktioniert jedoch nur bedingt und erfordert eine präzise Einstellung der Sauger in Bezug zum Plattenrand, die aufwändig ist und bei größeren Plattentoleranzen zu Störungen führt.

Aus der gattungsbildenden US 3 724 687 A ist ein Sauger bekannt, welcher sowohl mit einer Vakuumquelle als auch mit einer Druckluftquelle zur Erzeugung von Vibrationen in Verbindung steht. In der JP 6 025 254 3 A wird eine Saugeinrichtung vorgeschlagen, welche konvexe und konkave Biegungen erzeugt.

Der Erfindung liegt die Aufgabe zugrunde, die oberste Kunststoffplatte eines Plattenstapels so abzuheben, dass ein sicheres Trennen von der nächsten Kunststoffplatte insbesondere beim Auftreten elektrostatischer Aufladung und/oder Adhäsion erfolgt und dazu weder Blasluft erforderlich ist noch mechanische Rückhaltungen benötigt werden, die zu Abrieb und/oder Aufwirbeln von Staub führen würden. Auf zusätzliche Einrichtungen wie Wagen, Blasdüsen, Bürsten, Riffelleisten sollte verzichtet werden können. Aufwändige Einstellarbeiten sollten nicht erforderlich sein. In Weiterbildung der Erfindung sollten gefundenen Einstellungen des Verfahrensablaufs plattenspezifisch abgespeichert werden können, sodass eine rasche Umrüstung der Vorrichtung einfach möglich ist.

Die Lösung der Erfindung ist im Patentanspruch 1 angegeben. Vorteilhafte Weiterbildungen sind Merkmale der Unteransprüche. Die Vorrichtung zum Abheben der obersten Kunststoffplatte ist durch die Ansprüche 4 und 5 beansprucht.

Die Erfindung ist nachfolgend anhand der schematischen Zeichnungen näher beschrieben. Es zeigen:

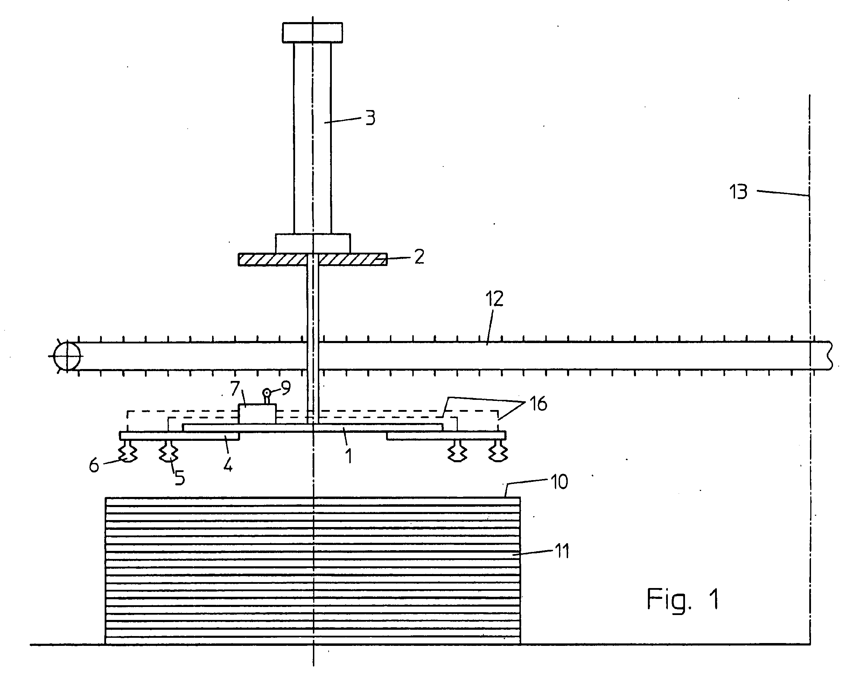

- Figur 1: eine Seitenansicht der Vorrichtung in Ausgangslage.

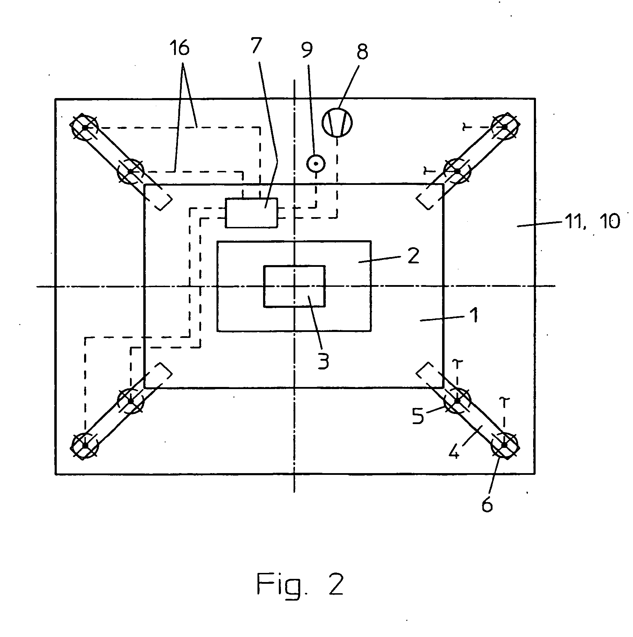

- Figur 2: eine Draufsicht auf die Vorrichtung.
- Figuren 3 bis 7: verschiedene Stufen des Verfahrensablaufs.
- Fig. 8: verschiedene Weiterbildungen der Erfindung.

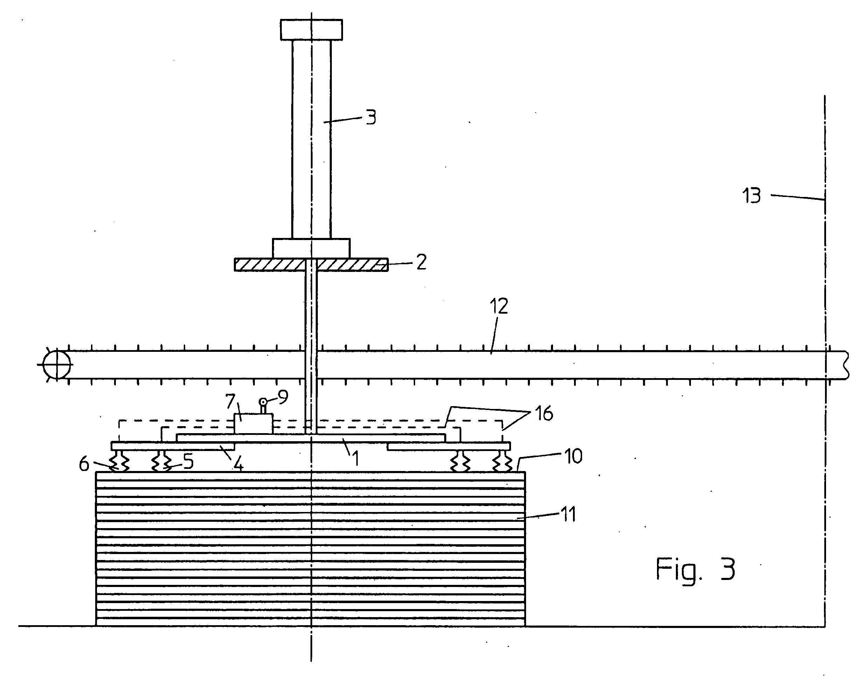

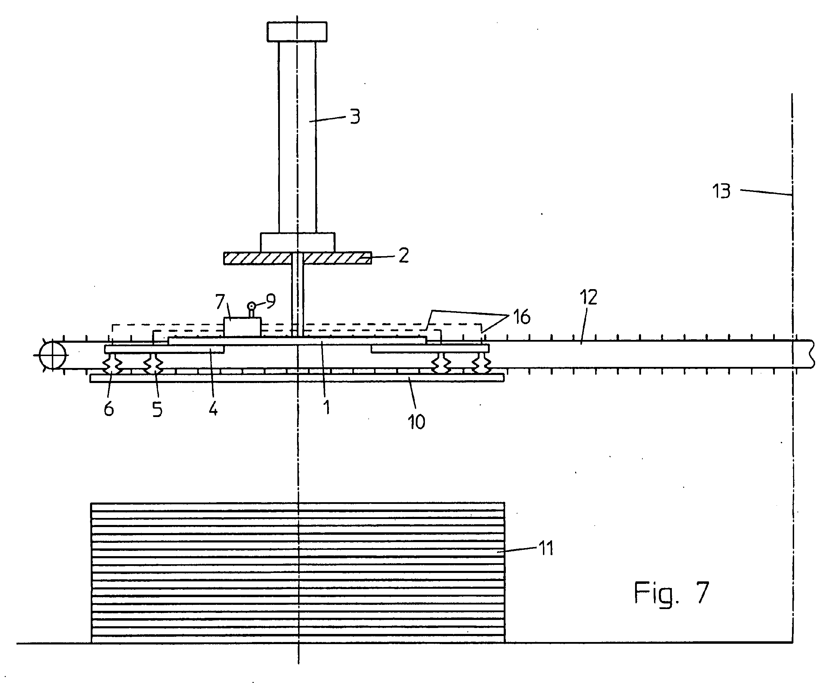

Die Vorrichtung zum Durchführen des Verfahrens besteht aus einem Träger 1, der über einen an einer ortsfesten Brücke 2 befestigten Antrieb 3 höhenverschiebbar ist. Am Träger 1 sitzen vorzugsweise vertikal verstellbare Saugerarme 4, an denen innere Sauger 5 und äußere Sauger 6 angeordnet sind, die über ein Schaltventil 7 und eine Steuerleitung 16 wahlweise und abwechselnd mit einer Vakuumquelle 8 oder mit einem Druckluftanschluss 9 in Verbindung gebracht werden können. Unter dem Begriff innere Sauger 5 und äußere Sauger 6 sind dabei auch jeweils Gruppen von Saugern 5, 6 zu verstehen, die gleichzeitig angesteuert werden. Der Einfachheit halber wird nachfolgend in der Beschreibung die Einzahl verwendet, in den Zeichnungen nur je ein Sauger 5, 6 dargestellt. Über den Antrieb 3 kann der Träger 1 zwischen einer Aufnahmestellung - die Sauger 5, 6 sitzen auf der obersten Kunststoffplatte 10 eines Plattenstapels 11 auf - (Figur 3) und einer Abgabestellung (Figur 7) verschoben werden. In der Abgabestellung erfolgt bei Verwendung der Vorrichtung als Teil einer Thermoformmaschine eine Übergabe an eine Transporteinrichtung 12, die die Kunststoffplatte 10 in deren Formstation 13 transportiert.

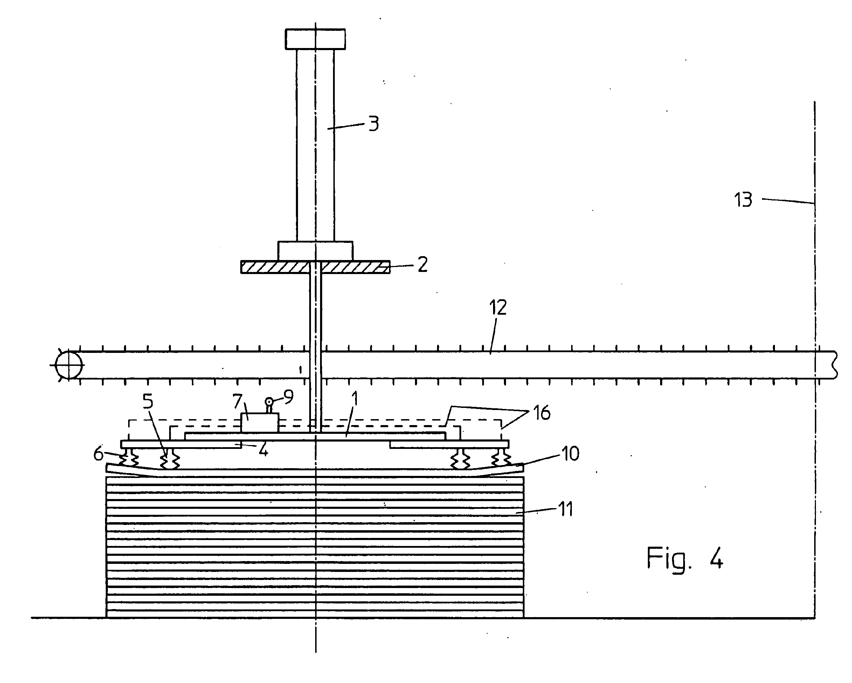

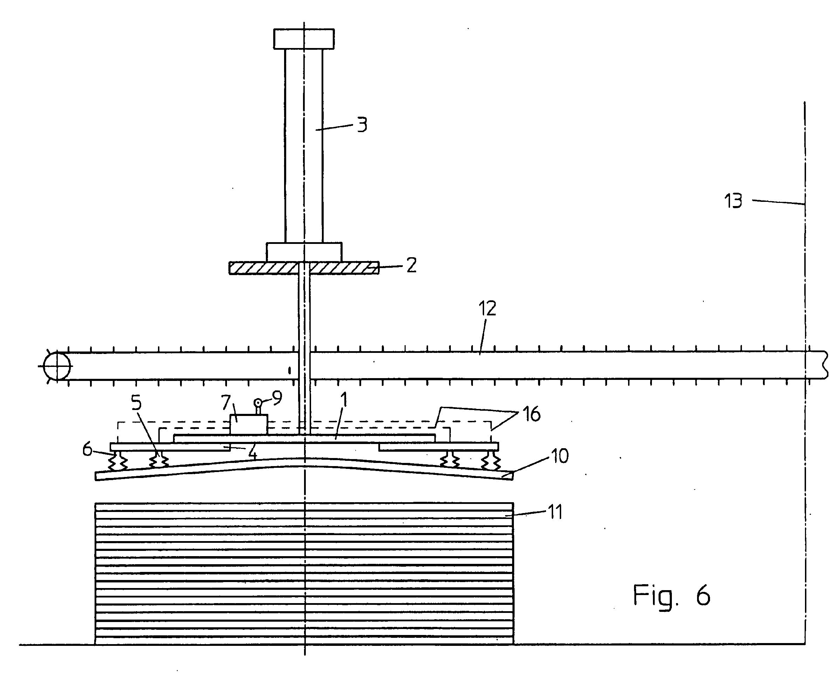

Gemäß einer ersten Ausführungsform der Vorrichtung sind die äußeren Sauger 6 so gestaltet, dass sie beim Anlegen von Vakuum einen größeren Hub ausführen können als die inneren Sauger 5. Dies ist z. B. dadurch erreichbar, dass sie einen grö-ßeren Faltbereich aufweisen. Wenn der Träger 1 so abgesenkt ist, dass die Sauger 5, 6 auf der obersten Kunststoffplatte 10 aufsitzen, werden alle Sauger 5, 6 mit der Vakuumquelle 8 in Verbindung gebracht. Der größere Hub der äußeren Sauger 6 bewirkt, dass sich die Ecken der Kunststoffplatte 10 und damit je nach ihrer Dicke mehr oder weniger die ganze Querseite anheben/abhebt. (Lage Figur 4). Wenn jetzt der Träger 1 angehoben wird, wölbt sich die Kunststoffplatte 10 insgesamt leicht nach unten durch (Lage Figur 4).
Als nächstes erfolgt ein Wölben der Kunststoffplatte 10 entgegengesetzt nach oben wie in Figur 6 dargestellt, was dadurch erreicht wird, dass die inneren Sauger 5 weiterhin mit der Vakuumquelle 8 verbunden bleiben, die äußeren Sauger 6 jedoch mit der Druckluftquelle 9 verbunden werden. Durch den entweichenden Luftstrahl werden die Ecken der Kunststoffplatte 10 nach unten gebogen, die Kunststoffplatte 10 wölbt sich insgesamt leicht nach oben. Falls nun beim Anheben der obersten Kunststoffplatte 10 eine zweite Kunststoffplatte an dieser klebt so erfolgt gerade durch diesen raschen Wechsel der Biegerichtung ein Abwerfen der zweiten Kunststoffplatte zurück auf den Plattenstapel 11. Sicherheitshalber kann man dieses Wechselspiel der Biegung mehrfach während des Abhebvorgangs durchführen, um auch fester haftende Kunststoffplatten sicher abzuwerfen. Dazu werden wiederholt die äußeren Sauger 6 abwechselnd mit der Vakuumquelle 8 und mit dem Druckluftanschluss 9 in Verbindung gebracht, wobei die Umschaltung über das Schaltventil 7 erfolgt. Wenn der Träger 1 die Abgabestellung erreicht hat (Figur 7) und das Übergeben der Kunststoffplatte 10 an die Transporteinrichtung 12 erfolgt ist, werden die Steuerleitungen 16 kurz auf Druckluftzufuhr zu den Saugern 5, 6 umgeschaltet, sodass deren Lösen von der Kunststoffplatte 10 eintritt.

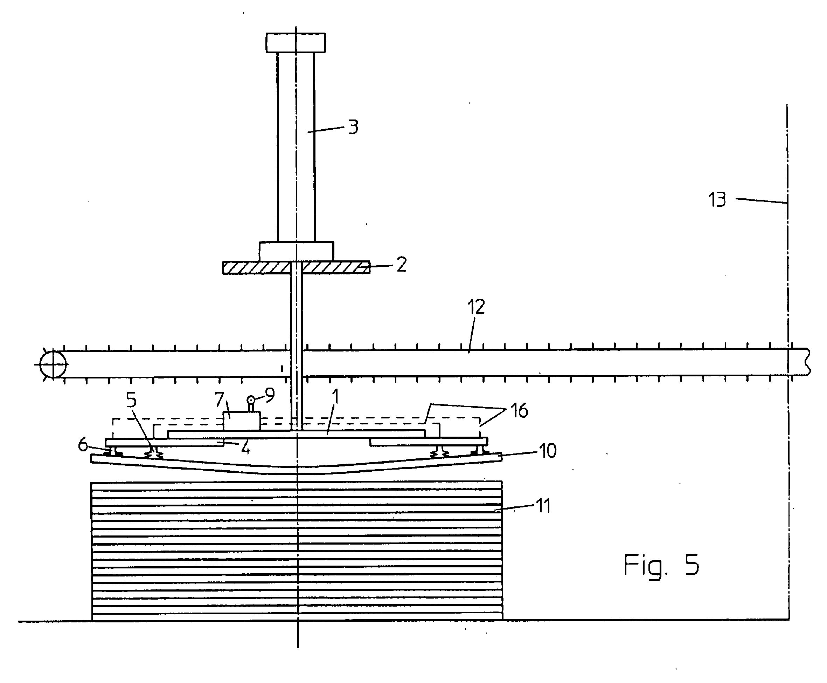

Nachfolgend werden noch einige vorteilhafte Weiterbildungen beschrieben.

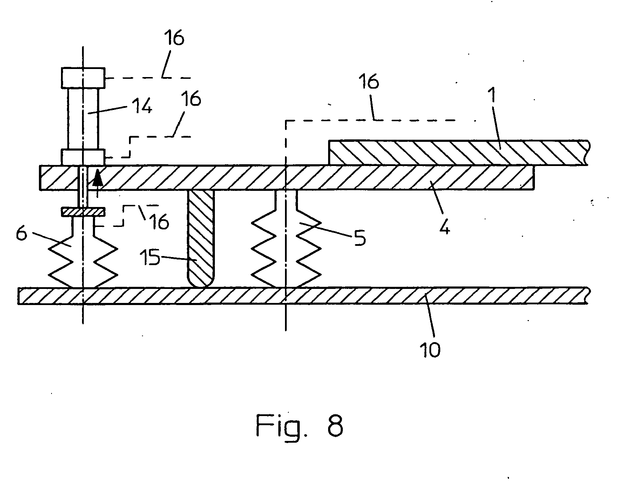

Figur 8 zeigt eine Variante der Gestaltung der Vorrichtung, um auf andere Weise eine wechselseitige Biegung der aufgenommenen Kunststoffplatte 10 zu erreichen. Dazu sind die äußeren Sauger 6 mit je einem Antrieb 14, beispielhaft dargestellt als ein Pneumatikzylinder, verbunden und können auf diese Weise höhenmäßig verschoben werden. Beim Aufnehmen der obersten Kunststoffplatte 10 sind die Antriebe 14 ausgefahren und fahren zunächst ein, wodurch die in Figur 4 dargestellte Position erreicht wird. Durch abwechselndes Aus - und Einfahren der Antriebe 14 erfolgt ein wechselndes Biegen der Kunststoffplatte 10. Dasselbe wird erreicht, wenn die Sauger 6 an schwenkbaren Aufnahmen befestigt und die Antriebe 14 so gestaltet und angeordnet sind, dass die äußeren Sauger 6 eine Schwenkbewegung erfahren.
Prinzipiell ist es möglich, das Abheben der obersten Kunststoffplatte 10 nach dem Ansaugen parallel vorzunehmen und erst nach einem geringen Abhebehub die äußeren Sauger 6 zu verschieben oder zu verschwenken, um die gewölbte Stellung gemäß Figur 5 zu erreichen.
Das Wölben der Kunststoffplatte an den Ecken 10 nach oben kann dadurch unterstützt werden, dass am Saugerarm 4 ein Anschlag 15 angeordnet ist, der als Biegekante dient (siehe Figur 8). In diesem Fall müssen nicht die inneren Sauger 5 als Biegekante dienen. Dabei können die Anschläge 15 zwischen den äußeren Saugern 6 und den inneren Saugern 5 - wie dargestellt - oder zwischen inneren Sauger 5 und dem Zentrum des Trägers 1 angeordnet sein.

In Weiterbildung der Erfindung wird ferner vorgeschlagen, Prozessdaten zum Erzeugen der Biegebewegung im Speicher der Steuerung der Vorrichtung abzulegen, sodass diese Prozessdaten bei einer Umrüstung der Vorrichtung auf einen Plattenstapel 11 mit Platten, die sich bezüglich Material, Dicke, Oberflächenstruktur etc. unterscheiden, rasch in die Steuerung geladen werden können. Solche Prozessdaten können beispielsweise Höhe und Zeitpunkt des Umschaltens des an den Saugern 5, 6 wirkenden Vakuums, die Anzahl der wechselnden Biegungen, der Zeitpunkt des Biegens sein. Diese Prozessdaten, die für eine bestimmte Kunststoffplatte durch Versuche als Optimum ermittelt werden, werden im Speicher der Steuerung der Vorrichtung hinterlegt. Wird die Vorrichtung zu einem späteren Zeitpunkt wieder zum Abheben dieser Kunststoffplatten eingesetzt, stehen die optimalen Prozessdaten zum Abruf bereit und müssen nicht neu ermittelt werden.

### Bezugszeichentabelle

| | | | |
|---|---|---|---|
| 1 | Träger | | |
| 2 | Brücke | | |
| 3 | Antrieb | | |
| 4 | Saugerarm | | |
| 5 | Sauger innen | | |
| 6 | Sauger außen | | |
| 7 | Schaltventil | | |
| 8 | Vakuumquelle | | |
| 9 | Druckluftanschluss | | |
| 10 | Kunststoffplatte oberste | | |
| 11 | Plattenstapel | | |
| 12 | Transporteinrichtung | | |
| 13 | Formstation | | |
| 14 | Antrieb | | |
| 15 | Anschlag | | |
| 16 | Steuerleitung | | |
| 17 | | | |
| 18 | | | |
| 19 | | | |
| 20 | | | |

## Patentansprüche

1. Verfahren zum Abheben einer obersten Kunststoffplatte (10) von einem Plattenstapel (11) mittels Saugern (5, 6), bei denen diese zur Anlage an die oberste Kunststoffplatte (10) gebracht, Vakuum aufgebaut und die oberste Kunststoffplatte (10) vom Plattenstapel (11) abgehoben wird, **dadurch gekennzeichnet, dass** die aufgenommene oberste Kunststoffplatte (10) während der Abhebbewegung wechselseitigen Biegungen unterworfen wird, wobei das Abheben der obersten Kunststoffplatte (10) zunächst parallel zum Plattenstapel (11) erfolgt und danach wechselseitige Biegungen vorgenommen werden.

2. Verfahren nach Anspruch 1, **dadurch gekennzeichnet, dass** die abwechselnden Biegungen der obersten Kunststoffplatte (10) durch Beaufschlagung von bezüglich inneren Saugern (5) außen angeordneten Saugern (6) mit unterschiedlichen Werten ihres Innendrucks erfolgen.

3. Verfahren nach einem der Ansprüche 1 oder 2, **dadurch gekennzeichnet, dass** die ermittelten Prozessdaten zum Erzeugen der Biegebewegungen in einer Steuerung der Vorrichtung abgespeichert und bei Umrüstung des Plattenstapels (11) aufgerufen werden.

4. Vorrichtung zum Abheben der obersten Kunststoffplatte (10) von einem Plattenstapel (11), bestehend aus einem höhenverschiebbaren Träger (1) mit daran angeordneten Saugern (5, 6), die mit einer Vakuumquelle (8) in Verbindung gebracht werden können, **dadurch gekennzeichnet, dass** paarweise äußere Sauger (6) und innere Sauger (5) angeordnet sind, wobei die inneren Sauger (5) zeitweise mit einer Vakuumquelle (8) und die äußeren Sauger (6) zeitweise und abwechselnd mit einer Vakuumquelle (8) und einem Druckluftanschluss (9) über ein Schaltventil (7) in Verbindung gebracht werden können.

5. Vorrichtung nach Anspruch 4, **dadurch gekennzeichnet, dass** sie mit einer Steuerung in Verbindung steht, in der Prozessdaten zum Erzeugen der Biegebewegung der Kunststoffplatte (10) abgespeichert und bei Umrüstung des Plattenstapels (11) aufgerufen werden können.

## Claims

1. Method for lifting off a top plastic sheet (10) from a sheet stack (11) by means of suction cups (5, 6), in the case of which the latter are brought to rest on the top plastic sheet (10), a vacuum is built up and the top plastic sheet (10) is lifted off from the sheet stack (11), **characterised in that** the lifted top plastic sheet (10) is subjected to reciprocating bending during the lifting movement, wherein the lifting off of the top plastic sheet (10) initially takes place parallel to the sheet stack (11) and reciprocating bending is carried out thereafter.

2. Method according to Claim 1, **characterised in that** the alternating bending of the top plastic sheet (10) takes place by means of subjecting suction cups (6) arranged externally with respect to inner suction cups (5) to different values of their internal pressure.

3. Method according to any one of Claims 1 or 2, **characterised in that** the process data produced for generating the bending movements are stored in a control of the device and are called up in the case of changing the sheet stack (11).

4. Device for lifting off the top plastic sheet (10) from a sheet stack (11), consisting of a support (1) which is displaceable in terms of height with suction cups (5, 6) arranged thereon, which suction cups can be brought into connection with a vacuum source (8), **characterised in that** external suction cups (6) and inner suction cups (5) are arranged in pairs, wherein the inner suction cups (5) can be intermittently brought into connection with a vacuum source (8) and the external suction cups (6) can be intermittently and alternately brought into connection with a vacuum source (8) and a compressed air connection (9) by means of a switch-over valve (7).

5. Device according to Claim 4, **characterised in that** it is connected to a control, in which process data for generating the bending movement of the plastic sheet (10) can be saved and called up in the case of changing of the sheet stack (11).

## Revendications

1. Procédé pour le soulèvement d'une plaque plastique (10) supérieure d'une pile de plaques (11) au moyen de ventouses (5, 6), avec lesquelles cette plaque est amenée en appui sur la plaque plastique (10) supérieure, le vide est établi et la plaque plastique (10) supérieure est soulevée de la pile de plaques (11), **caractérisé en ce que** la plaque plastique (10) supérieure réceptionnée est soumise pendant le mouvement de soulèvement à des flexions mutuelles, le soulèvement de la plaque plastique (10) supérieure s'effectuant d'abord parallèlement à la pile de plaques (11) et des flexions mutuelles étant effectuées ensuite.

2. Procédé selon la revendication 1, **caractérisé en ce que** les flexions mutuelles de la plaque plastique (10) supérieure s'effectuent par l'alimentation de suceurs (6) disposés à l'extérieur par rapport à des suceurs (5) intérieurs avec différentes valeurs de leur pression intérieure.

3. Procédé selon l'une quelconque des revendications 1 ou 2, **caractérisé en ce que** les données de processus déterminées sont stockées pour générer les mouvements de flexion dans une commande du dispositif et sont appelées en cas de rééquipement de la pile de plaques (11).

4. Dispositif pour soulever la plaque plastique (10) supérieure d'une pile de plaques (11), constitué d'un support (1) déplaçable en hauteur avec des suceurs (5, 6) disposés dessus, qui peuvent être amenés en liaison avec une source de vide (8), **caractérisé en ce que** des suceurs (6) extérieurs et des suceurs (5) intérieurs sont disposés par paires, les suceurs (5) intérieurs pouvant être amenés en liaison temporairement avec une source de vide (8) et les suceurs (6) extérieurs de façon temporaire et alternative avec une source de vide (8) et un branchement d'air comprimé (9) au moyen d'une vanne de commutation (7).

5. Dispositif selon la revendication 4, **caractérisé en ce qu'**il est en liaison avec une commande dans laquelle des données de processus peuvent être stockées pour générer le mouvement de flexion de la plaque plastique (10) et peuvent être appelées en cas de rééquipement de la pile de plaques (11).
